(19) Europäisches Patentamt
European Patent Office
Office européen des brevets

(11) EP 3 983 577 B1

(12) # EUROPEAN PATENT SPECIFICATION

(45) Date of publication and mention of the grant of the patent:
**21.06.2023 Bulletin 2023/25**

(21) Application number: **20768089.3**

(22) Date of filing: **12.06.2020**

(51) International Patent Classification (IPC):
***C25B 13/08*** *(2006.01)* ***C25B 13/02*** *(2006.01)*
***C25B 1/14*** *(2006.01)*

(52) Cooperative Patent Classification (CPC):
**C25B 13/08; C25B 1/14; C25B 13/02**

(86) International application number:
**PCT/HU2020/050024**

(87) International publication number:
**WO 2020/249988 (17.12.2020 Gazette 2020/51)**

(54) **POLYPROPYLENE OR POLYETHYLENE BASED SEPARATOR FOR USE IN ELECTROCHEMICAL CELLS FOR PRODUCING ALKALI METAL FERRATES**

AUF POLYPROPYLEN ODER POLYETHYLEN BASIERENDER SEPARATOR ZUR VERWENDUNG FÜR ELEKTROCHEMISCHE ZELLEN ZUR HERSTELLUNG VON ALKALIMETALLFERRATEN

SÉPARATEUR À BASE DE POLYPROPYLÈNE OU DE POLYÉTHYLÈNE DESTINÉ À ÊTRE UTILISÉ DANS DES CELLULES ÉLECTROCHIMIQUES POUR PRODUIRE DES FERRATES DE MÉTAUX ALCALINS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2019 HU 1900214**

(43) Date of publication of application:
**20.04.2022 Bulletin 2022/16**

(73) Proprietor: **Eötvös Loránd Tudományegyetem**
**1053 Budapest (HU)**

(72) Inventors:
- **LÁNG, Gy z**
  **1238 Budapest (HU)**
- **VARGA, Imre Péter**
  **1036 Budapest (HU)**
- **ZÁRAY, Gyula**
  **1222 Budapest (HU)**
- **VARGA, József**
  **1031 Budapest (HU)**

(74) Representative: **Danubia Patent & Law Office LLC**
**Bajcsy-Zsilinszky út 16**
**1051 Budapest (HU)**

(56) References cited:
**EP-A1- 0 216 428**
**EP-A1- 0 216 428**
**WO-A1-2012/116994**
**WO-A2-2005/069892**
**CN-B- 103 014 746**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 983 577 B1

## Description

### Subject matter of the invention

The subject of the present invention is an ultra-low resistance polypropylene or polyethylene-based composite separator (also known as membrane or diaphragm), which can be used to separate the anode and cathode compartments of an electrolysis (electrolytic) cell for the production of alkali metal ferrates.

### Description of the state of the art

According to their inorganic chemical characterization, ferrates according to the formula $Me_2FeO_4$, $Me_1Me_2FeO_4$ or $MeFeO_4$ can be formally considered as salts of ferric acid ($H_2FeO_4$) containing Fe(VI), which is not known in free state. These salts are dark in the solid state, usually black-purple, violet or purple in solution (their more diluted solution is pink).

Ferrates are very reactive, decomposing on contact with air or water. This is because they are very strong oxidizing agents, they also slowly oxidize water (while being reduced to Fe (III) in aqueous solution). They decompose rapidly in acidic or neutral pH solutions, and relatively slowly in strongly alkaline solutions. The production of stabilized ferrate usually takes place through a large number of processing steps and requires significant synthetic work. Shipping and packaging costs are also significant, as air and moisture-free packaging is required for shelf life. This is usually solved by using ampoule.

"Traditional" production methods for ferrates, starting from solid reaction partners, are commonly referred to as "dry methods". For the synthetic chemical preparation of potassium ferrate in aqueous solution, G.W. Thompson, L.T. Ockerman and J.M. Schreyer proposed a method in 1951 [G.W. Thompson, L.T. Ockerman, J.M. Schreyer, Preparation and purification of potassium ferrate (VI), Journal of the American Chemical Society 73 (1951) 1379-1381.].

In practice, electrochemical production is preferred over conventional synthetic chemical preparation. During the anodic dissolution of iron (cast iron), ferrate formation was first observed by Poggendorf in 1841 [J.C. Poggendorff, Sitzungsberichte der Akademie der Wissenschaften zu Berlin 263 (1841) 312. és J.C. Poggendorf, Ueber die Frage, ob es wirksame galvanische Ketten ohne primitive chemische Action gebe, und über die Bildung der Eisensäure auf galvanischem Wege, Annalen der Physik und Chemie 54 (1841) 353-377]. At the beginning of the last century, F. Haber and W. Pick discussed the possibilities of producing ferrate salts in several papers. Perhaps the most interesting of these is the study "Über die elektrochemische Bildung eisensaurer Alkalisalze" published by W. Pick and F. Haber in 1901 [W. Pick, F. Haber, Über die elektrochemische Bildung eisensaurer Alkalisalze, Zeitschrift für Elektrochemie 17 (1901) 713-724]. In the more than 100 years since then, several attempts have been made to produce ferrates chemically and electrochemically. The preparation of ferrate has been attempted mainly in concentrated NaOH or KOH solutions or in mixtures of different compositions. The electrochemical production of ferrates has been improved by Hungarian patent application No. P1600474, the basic idea of which is to keep the electrode surface at a temperature higher than the electrolyte temperature in order to apply those parameters giving preference to the metal dissolution state over oxygen evolution during electrolysis. In the developed electrochemical cell, the anode and the cathode are usually separated by a separator (diaphragm), which is described as a polypropylene film.

It can be stated that one of the biggest problem in the electrochemical production of ferrates (typically sodium or potassium ferrate) is presented by the highly aggressive medium, both chemically and electrochemically. The presence of an electrolyte solution with a strongly alkaline and also a strong oxidative property significantly limits the range of structural materials that can be used, with among commercially available materials only polypropylene (PP) and polyethylene (PE) being used safely. Separators (diaphragm, membrane) must be used in the electrolysis cell to prevent contact between ferrate ions on the anode and dissolved hydrogen on the cathode. They must also be made of materials resistant to aggressive media, which remain stable for a long time in industrial applications. In cells used for the production of ferrates, ion exchange/ion-conducting membranes are usually used, which are quite expensive and often have a relatively high resistance of nafion-type [fluoropolymer copolymer with poly (tetrafluoroethylene) (Teflon$^{tm}$) backbone and perfluorosulfonic acid side chains] (it is noted that CN1233876C patent document also discloses perfluorinated membranes in its examples). One of the disadvantages of these membranes is that their resistance is relatively high and they can be easily clogged by the Fe(III)-containing precipitate formed in the cell.

It has been known that in the past attempts have been made to use microporous polyethylene/polypropylene membranes (also known as films). For microporous membranes, the cell resistance is even higher than for "nafion-type" ion-conducting membranes. This is probably the reason why, to our knowledge, no one has used them even on a semi-industrial scale since 2005.

Polypropylene and polyethylene woven and non-woven ("felt" or "vlies (fleece)") fabrics (felt-like textiles) are commercially available, which are used primarily as technical fabrics, e.g. they are produced in large quantities in the furniture industry, but also in applications in the fields from work and protective clothing, mechanical engineering, insulation and shielding, and are therefore very cheaply available (eg. PGX S-30, manufactured by Monopolist 2000).

In our experiments, it has surprisingly been found that the precipitation of a precipitate containing Fe(III) oxide hydroxide on fabrics of suitable thickness and pore size made from the above materials can be used to form a "composite" membrane which can be effectively used as an separator in alkaline media for electrochemical production of alkali metal ferrates.

The prior art has been reviewed to determine whether prior art teaches the use of polypropylene and polyethylene woven and non-woven ("felt" or "vlies (fleece)") fabrics according to the present invention, i.e., for the production of separators, which can be used in electrochemical (electrolysis) cells for the production of alkali metal ferrates to separate the anode and cathode compartments.

Chinese patent document No. CN1233876C discloses the preparation of solid potassium ferrate by electrolysis, where the target compound is prepared in potassium hydroxide solution by anodic oxidation with an iron-containing electrode. According to the description, the process is carried out in concentrated KOH solution in an electrolysis tank containing a membrane as a separator. The membrane may be, inter alia, a "microporous polyethylene membrane" or a "polyethylene membrane" or a "microporous membrane" (a perfluorocarbon membrane is used in the examples). Non-woven materials are not mentioned in the description, so that only (high resistance) microporous membranes are taught in this description.

JP2002151038A patent document relates to a separator used in an alkaline cell which separates the cathode and anode compartments. The separator used is made of polyolefin resin, which can be a non-woven fabric or a porous film. However, said electrochemical cell is not for the production of ferrate, so there is no reference in the description to the separator according to the invention, where the Fe (III)-containing precipitate is deposited on the membrane, which provides very significant advantages in an electrochemical cell for the production of ferrate (see below).

Chinese patent document No. CN102487132A discloses a separator ensuring ion transfer for use in batteries. According to the disclosure, the separator comprises a membrane of a layered porous support on which a copolymer of the alkylene (olefin) or alkylene salt type is applied, wherein the underlying layered porous support may also be a non-woven fibrous material based on polypropylene. During the preparation, a plasticizer and one or more various inorganic compounds (salt, hydroxide or oxide) are added, which may include Fe(III) hydroxide. The composition of the resulting membrane differs significantly from that of the present invention and is not associated with ferrate production (as mentioned, the membranes produced are used in a battery).

U.S. Pat. document No. 7,054,051B2 relates to the preparation of a ferrate(VI) salt by an electrochemical process using an iron-containing anode in an aqueous solution containing at least two hydroxides and adding a ferric salt or ferrous metal particles as a ferric ion source, but not using an anode and cathode separator ("no separator").

It can be concluded that the above documents do not describe the solution according to the invention, nor can they be combined with each other to achieve the solution according to the invention, since none of them suggests that it would be expedient to deposit a Fe (III)-containing precipitate on the separator in the production of ferrate.

## Detailed description of the invention

*Characteristics of supports that can be used as separators*

The supports, which can be used in the separator, can be woven or non-woven supports consisting of polyethylene and/or polypropylene fibres, preferably woven or non-woven fabrics. The supports generally contain a single type of polymer fibre, but in theory supports containing a mixture of polyethylene and polypropylene fibres cannot be excluded either. Preferred supports are non-woven fabrics made of polyethylene and/or polypropylene fibres, preferably fabrics made of a single polymer. Fabrics containing a single polymer fibre are commercially available and therein the polyethylene and/or polypropylene are high molecular weight polyethylene and/or polypropylene commonly used in the art, which, due to the high polymerization level, may have an average molecular weight of several kg/mol [even up to 6000 kg/mol, see Sara Ronca, in Brydson's Plastics Materials (Eighth Edition), 2017].

An electron micrograph of a polypropylene (PP) fleece fabric useful as a support in the separator of the present invention is shown in FIG 1.

Based on the recordings, the pore sizes are in the range of 1 to 100 micrometers, where the arithmetic mean of the pore sizes is approx. 10 to 50 micrometers.

The fibre thickness is preferably 5 to 50 micrometers, preferably 10 to 25 micrometers (for the fabric shown in Figure 1, the fibre thickness is about 15 to 21 micrometers).

The thickness of the support used is preferably 0.1 to 1 mm, preferably 0.15 to 0.5 mm, more preferably 0.2 to 0.3 mm.

The above values of pore size, fibre thickness and fabric thickness are equally indicative for woven and non-woven fabrics, and can be associated in principle to a preferred embodiment in practice, but of course the applicability of a carrier characterized by parameters outside the intervals cannot be ruled out. However, we have observed that the

higher resistance of fabrics being thicker or having smaller pore size adversely affects their application.

Preferred textiles in practice are often characterized by their weight per unit area (surface density), which is in the range of 5 $g/m^2$ to 100 $g/m^2$ for suitable polyethylene and polypropylene textiles. This value is preferably approx. 15 to 70 $g/m^2$, more preferably about 25 to 40 $g/m^2$, for example 30 $g/m^2$. It is preferred that the surface is not hydrophobic.

It is further noted that in a preferred embodiment, several (preferably 2 or 3) layers with the above parameters are used in the cells.

*Methods for the preparation of new types of separators by depositing the Fe(III)-containing precipitate on a support*

The separator of the present invention can be prepared by any of the following methods.

- The support used (preferably non-woven fabric) is soaked in an aqueous solution of Fe(II)- (e.g. Mohr's salt) and/or Fe(III)-salts (e.g. chloride or sulphate), and then immersed in an aqueous alkaline solution (aqueous NaOH, KOH solution) (in the case of Fe(II)-salts, in the presence of oxygen, preferably air). After the formation of Fe(III)-containing precipitate has separated, the fabric is rinsed with distilled water.

- The support used (preferably non-woven fabric) is soaked in an alkaline solution, then immersed in an aqueous solution of Fe(II)- (e.g. Mohr's salt) and/or Fe(III)-salts (e.g. chloride or sulphate) (in the case of Fe(II)-salts in the presence of oxygen, preferably air). After the Fe(III)-containing precipitate has deposited, the fabric is rinsed with distilled water.

The formation of the Fe(III)-containing precipitate in the above methods can typically take place according to the following equations:

$$2Fe^{2+}+4OH^{-}+1.5O_2+H_2O=2Fe(OH)_3$$

$$Fe^{3+}+3OH^{-}=Fe(OH)_3$$

$$Fe(OH)_3=FeO(OH)+H_2O$$

$$2FeO(OH)=Fe_2O_3+H_2O$$

- The support used (preferably non-woven fabric) is soaked in distilled water, then immersed in an aqueous solution of ferrate salts (e.g. alkali metal ferrates, typically $Na_2FeO_4$, $K_2FeO_4$). After the deposition of the Fe(III)-containing precipitate, the tissues are rinsed with distilled water.

In the above two cases, the formation of the Fe(III)-containing precipitate typically takes place according to the following equations:

$$2FeO_4^{2-}+5H_2O=2\,Fe(OH)_3+1.5O_2+4OH^-$$

$$2FeO_4^{2-}+3H_2O=2\,FeO(OH)+1.5O_2+4OH^-$$

$$2FeO_4^{2-}+2H_2O=Fe_2O_3+1.5O_2+4OH^-$$

The above reactions are preferably carried out in an air atmosphere, at ambient temperature (about 18 to 26 °C, preferably 20 to 24 °C) and at atmospheric pressure (preferably 0.99 to 1.03 $\times$ $10^5$ Pa).

It is further noted that the Fe(III)-containing precipitate of the composite separator according to the invention is formed over time in the electrochemical (electrolysis) production of ferrates as a reaction product of ferrate formed at the anode and (dissolved) hydrogen formed at the cathode in the cell on the surface of the fibrous support made of polyethylene and/or polypropylene fibres, if a "clean" support (e.g. a textile) is used as a separator at the beginning of the electrolysis. In this case, the reduction of the ferrate (reaction with hydrogen) takes place continuously in the anode compartment until the formation of the composite separator membrane. However, in this case the product is significantly

more contaminated, see the results of Experimental Examples 1 and 2, i.e. this method is mentioned only for the sake of theoretical completeness, as in practice it does not lead to a product of ideal purity.

*Advantageous properties of the new type of separators*

The polypropylene or polyethylene based "composite" separators proposed above can be produced very cheaply and are extremely stable in the medium used for the electrochemical production of ferrates. A very significant advantage is that the electrical resistance of the electrochemical cells containing the separator according to the invention is only a fraction of the resistance of the cells using other types of separators: typically a maximum of a few tenths of an ohm of resistance as compared to the order of 1 to 100 ohms for other types of separators. The latter feature is particularly advantageous for the energy balance. At the current of 20 to 32 A, which is typically used in production, the power is approx. 60 to 150 W, compared to 0.400 to 100 kW for other types of separators.

A further advantage is that the electrolysis on an industrial scale requires a supply unit with much lower power (lower maximum output voltage) when the same current is applied, which is significantly cheaper than higher power equipment. At a current of 20 to 32 A, which we typically use, the terminal voltage is approx. 3 to 5 V in contrast with 20 to 3200 V for other types of separators. When operating cells connected in series, the difference is multiplied, making it particularly significant.

A further advantage is that the performance of the new type of composite membranes is not impaired by the Fe(III) compounds formed in the cell, since the Fe(III)-containing precipitate/layer deposited on the support is regenerated during the operation of the cell. Our assumption is that the mechanism of this is based on that the dissolved hydrogen from the cathode reacts with the ferrate ions formed on the surface of the separator or inside it, and the resulting precipitate is bound on the surface or in the pores of the separator.

$$2\,FeO_4^{2-} + 3\,H_2 + 2H_2O = 2\,Fe(OH)_3 + 4\,OH^-$$

$$2\,FeO_4^{2-} + 3\,H_2 = Fe_2O_3 + 4\,OH^- + H_2O$$

$$2\,FeO_4^{2-} + 3\,H_2 = 2\,FeO(OH) + 4\,OH^-$$

Thus, the Fe(III)-containing contaminant by-product does not enter the anode compartment. This has a double advantage, as Fe(III)-containing materials not only contaminate the product and impair power consumption, they also catalyze (accelerate) the decomposition of ferrate ions. In the case under discussion, this process also takes place only on the surface of the membrane e.g. according to the following equations:

$$2\,FeO_4^{2-} + 5\,H_2O = 2\,Fe(OH)_3 + 1.5\,O_2 + 4\,OH^-$$

$$2\,FeO_4^{2-} + 2\,H_2O = Fe_2O_3 + 1.5\,O_2 + 4\,OH^-$$

$$2\,FeO_4^{2-} + 3\,H_2O = 2FeO(OH) + 1.5\,O_2 + 4\,OH^-$$

Based on the above, it can be said that said Fe(III)-containing precipitate is a mixture of $Fe(OH)_3$, $Fe_2O_3$ and FeO(OH) compounds. This precipitate, when wet, contains water as appropriate, but the separator can be removed from the apparatus and dried together with the Fe(III)-containing precipitate. At this time, the Fe(III)-containing precipitate on the surface of the support is in an air-dry state, which is a stable state, i.e. the separator can be stored in this way and then reused later.

It is also advantageous that the separators used in one or more layers can be used in several production processes (in our own experiments, the fabrics were usually used in 2 or 3 layers, and they were usually reused in 3 to

5 cases).

**Brief description of the drawing**

Figure 1: Electron micrograph of a polypropylene (PP) fleece fabric which can be used as a carrier in the separator according to the invention.

**EXAMPLES**

**Example 1**

**Preparation of sodium ferrate solution using 2 layers of composite separator ("pretreated" membrane, PP fleece fabric: 30 g/m$^2$)**

a) Preparation of the separator

a1) In the separator, the support is made of a non-woven PP textile ("fleece" fabric) having a surface density of 30 g/m$^2$. The electron micrograph of the PP fleece fabric used is shown in Figure 1. The pore sizes are in the range of 1-100 micrometers, the fibre thickness is approx. 15 to 21 micrometers and the thickness of the support is approx. 0.2 and 0.3 mm.

Pouches were formed from the fleece fabric that could be fitted to the cathodes (size: approximately 17.5 cm x 28.5 cm).

a2) Pretreatment of the support:

1. The fleece fabric was thoroughly moistened with distilled water.
2. The fleece fabric was soaked for 3 hours in an aqueous solution containing $Na_2FeO_4$ and sodium hydroxide at a concentration of 6 g/dm$^3$ for ferrate ions and 14 mol/dm$^3$ for sodium hydroxide.
3. The fleece fabric containing sodium ferrate and the deposited iron(III) precipitate was soaked in distilled water for 5 minutes and then gently rinsed.

The separator prepared as above was used directly in the electrolysis cell. Two separator pouches were used on both cathode plates, keeping a distance of 2 to 3 mm between the cathode plate and the layer closer to it, as well as between the two layers, with polypropylene (PP) spacers.

c) Properties of the electrolysis cell and electrolysis conditions

The volume of the electrolysis cell was $V_c$ = 2100 cm$^3$. The outer jacket of the electrolysis cell was tempered by a water bath at 15 °C, while the surface of the anode was tempered in built-in tempering tubes with water at approx. 32 °C. The material of the electron-conducting phase of the anode is white cast iron. Anode geometric surface used: 1010 cm$^2$. The arrangement of the anode and cathode plates is a symmetrical "sandwich" where two cathode plates enclose the anode. Electrolyte solution in the cell: 16 mol/dm$^3$ NaOH solution. Electrolysis current strength: $I$ = 22 $A$. Cell resistance (determined by impedance measurement): 0.173 Ω. The electric potential difference of the cell (cell voltage) during electrolysis is 3.5 to 4.1 V. Duration of electrolysis: 4 h.

Efficient electrical energy consumption: $E \approx$ 335 Wh.
Anode weight loss: $\Delta m$ = 6.65 g.

(a) Charge efficiency calculated from weight loss:

$$\eta = \frac{6{,}65\,\mathrm{g}}{55{,}85\,\mathrm{g\cdot mol^{-1}}} \cdot \frac{6 \times 96485\,\mathrm{C\cdot mol^{-1}}}{22\,\mathrm{A} \times 4\,\mathrm{h} \times 3600\,\mathrm{s\cdot h^{-1}}} = 0{,}218$$

b) Concentration of ferrate ions in the solution immediately after electrolysis (determined by spectrophotometry):

$c_{FeO_4^{2-}} = 6{,}64\ g/dm^3$.

Charge efficiency calculated on the basis of spectrophotometry:

$$\eta = \frac{6{,}64\,g \cdot dm^{-3} \times 2{,}10\,dm^3}{119{,}84\,g \cdot mol^{-1}} \cdot \frac{6 \times 96485\,C \cdot mol^{-1}}{22\,A \times 4\,h \times 3600\,s \cdot h^{-1}} = 0{,}212$$

Based on the above, the estimated purity of the product is:

$$y = \frac{m_{Fe(ferrate)}}{\Delta m_{Fe}} = \frac{6{,}50\,g}{6{,}65\,g} \approx 98\,\%$$

c) Concentration of ferrate ions 4 hours after electrolysis in the solution stored at 10 °C (determined by spectrophotometry) = 6,27 g/dm$^3$.

The corresponding "effective" charge efficiency is: $\eta$ = 0,201

**Example 2**

**Preparation of sodium ferrate solution using 2 layers of PP fleece fabric (30 g/m$^2$) separator (membrane prepared "in situ")**

The separator used and the cell are as given in Example 1. Electrolyte solution in the cell: 16 mol/dm$^3$ NaOH solution. Electrolysis current strength: *I* = 22 A. Cell resistance (determined by impedance measurement): 0.171 Ω. The electric potential difference of the cell (cell voltage) during electrolysis is 3.4 to 4.0 V. Duration of electrolysis: 4 h.

Efficient electrical energy consumption: *E* ≈ 330 Wh.
Weight loss of the anode: $\Delta m$ = 6.72 g.

(a) Charge efficiency calculated from weight loss:

$$\eta = \frac{6{,}72\,g}{55{,}85\,g \cdot mol^{-1}} \cdot \frac{6 \times 96485\,C \cdot mol^{-1}}{22\,A \times 4\,h \times 3600\,s \cdot h^{-1}} = 0{,}220$$

b) Concentration of ferrate ions after electrolysis in the solution (determined by spectrophotometry): $c_{FeO_4^{2-}} = 6{,}44\ g/dm^3$.

Charge efficiency calculated on the basis of spectrophotometry:

$$\eta = \frac{6{,}44\,g \cdot dm^{-3} \times 2{,}10\,dm^3}{119{,}84\,g \cdot mol^{-1}} \cdot \frac{6 \times 96485\,C \cdot mol^{-1}}{22\,A \times 4\,h \times 3600\,s \cdot h^{-1}} = 0{,}206$$

The corresponding "effective" charge efficiency is:

$$y = \frac{m_{Fe(ferrát)}}{\Delta m_{Fe}} = \frac{6{,}30\,g}{6{,}72\,g} \approx 94\,\%$$

c) Concentration of ferrate ions 4 hours after electrolysis in the solution stored at 10 °C (determined by spectrophotometry) $c_{FeO_4^{2-}} = 5{,}97\ g/dm^3$.

The corresponding "effective" charge efficiency is: $\eta$ = 0,191.

It can be seen that all the essential end-state parameters of the process are worse than the corresponding values in Example 1.

**Example 3 (reference example)**

**Preparation of sodium ferrate solution without the use of a separator**

The cell used is as given in Example 1. Electrolyte solution in the cell: 16 mol/dm$^3$ NaOH solution. Electrolytic current: $I$ = 22 A. Cell resistance (determined by impedance measurement): 0.153 Ω. The electric potential difference of the cell (cell voltage) during electrolysis is 3.4 to 4.1 V. Duration of electrolysis: 4 h.

Effective electrical energy consumption: $E \approx$ 300 Wh.
Anode weight loss: Δm = 6.62 g.

(a) Charge efficiency calculated from weight loss:

$$\eta = \frac{6{,}62\,\mathrm{g}}{55{,}85\,\mathrm{g}\cdot\mathrm{mol}^{-1}} \cdot \frac{6\times 96485\,\mathrm{C}\cdot\mathrm{mol}^{-1}}{22\,\mathrm{A}\times 4\,\mathrm{h}\times 3600\,\mathrm{s}\cdot\mathrm{h}^{-1}} = 0{,}217$$

b) Concentration of ferrate ions immediately after electrolysis in the solution (determined by spectrophotometry):

$c_{\mathrm{FeO_4^{2-}}} = 4.32\ \mathrm{g/dm^3}$.

Charge efficiency calculated on the basis of spectrophotometry:

$$\eta = \frac{4{,}32\,\mathrm{g}\cdot\mathrm{dm}^{-3}\times 2{,}10\,\mathrm{dm}^3}{119{,}84\,\mathrm{g}\cdot\mathrm{mol}^{-1}} \cdot \frac{6\times 96485\,\mathrm{C}\cdot\mathrm{mol}^{-1}}{22\,\mathrm{A}\times 4\,\mathrm{h}\times 3600\,\mathrm{s}\cdot\mathrm{h}^{-1}} = 0{,}138$$

Based on the above, the estimated purity of the product is:

$$y = \frac{m_{\mathrm{Fe(ferrát)}}}{\Delta m_{\mathrm{Fe}}} = \frac{4{,}23\,\mathrm{g}}{6{,}62\,\mathrm{g}} \approx 64\,\%$$

c) Concentration of ferrate ions 4 hours after electrolysis in the solution stored at 10 °C (determined by spectrophotometry) $c_{\mathrm{FeO_4^{2-}}} = 3{,}07\ \mathrm{g/dm^3}$.

The corresponding "effective" charge efficiency is: $\eta$ = 0,098.

It can be seen that all the essential end-state parameters of the process are significantly worse than the corresponding values in Example 1 and 2.

**Claims**

1. A separator for separating the anode and cathode compartments in electrochemical cells, comprising

   (a) a support made of polyethylene and/or polypropylene fibres, and
   b) a Fe(III)-containing precipitate deposited on the support according to point a).

2. The separator according to Claim 1, wherein the arithmetic mean of the pore sizes in the support is approx. 1-100 micrometers, preferably approx. 10-50 micrometers.

3. The separator according to Claim 2, wherein the fibre thickness in the support is 5 to 50 micrometers, preferably

10 to 25 micrometers.

4. The separator according to any one of Claims 1 to 3, wherein the support is a woven or non-woven support, preferably a non-woven textile.

5. The separator according to Claim 4, wherein the thickness of the non-woven support is preferably 0.1 to 1 mm, preferably 0.15 to 0.5 mm, more preferably 0.2 to 0.3 mm.

6. The separator according to Claim 4 or 5, wherein the non-woven support has a surface density of approx. 5-100 $g/m^2$, preferably approx. 15-70 $g/m^2$, more preferably approx. 25-40 $g/m^2$.

7. The separator according to any one of Claims 1 to 6, wherein the Fe(III)-containing precipitate comprises $Fe(OH)_3$, $Fe_2O_3$ and FeO(OH).

8. The separator according to any one of claims 1 to 7, wherein the Fe(III)-containing precipitate is in an air-dry state.

9. A process for producing a separator for separating the anode and cathode spaces in electrochemical cells, the process being selected from the following process variants:

a) a support made of polyethylene and/or polypropylene fibres is soaked in an aqueous solution of one or more water-soluble Fe(II) salt(s) and/or Fe (III) salt(s), then immersed in an aqueous alkali solution, where in case of Fe(II) salt the use of oxygen atmosphere, preferably air atmosphere is mandatory, then after the deposition of the Fe(III)-containing precipitate, the support is rinsed with distilled water and, if desired, dried;
b) a support made of polyethylene and/or polypropylene fibres is soaked in an aqueous alkaline solution, then immersed in an aqueous solution of one or more water-soluble Fe(II) salt(s) and/or Fe(III) salt(s), where in case of Fe(II) salt the use of oxygen atmosphere, preferably air atmosphere is mandatory, then after the deposition of the Fe(III)-containing precipitate, the support is rinsed with distilled water and, if desired, dried;
c) a support made of polyethylene and/or polypropylene fibres is soaked in a solution of one or more ferrate salt(s), preferably $Na_2FeO_4$ and/or $K_2FeO_4$, then immersed in distilled water and, after the deposition of the Fe(III)-containing precipitate, the fabrics are rinsed with distilled water and, if desired, dried;
d) a support made of polyethylene and/or polypropylene fibres is soaked in distilled water, then immersed in a solution of one or more ferrate salt(s), preferably $Na_2FeO_4$ and/or $K_2FeO_4$, and after the deposition of the Fe(III)-containing precipitate, the fabrics are rinsed with distilled water, and, if desired, dried; or
e) during the electrolysis of an alkali metal ferrate salt, preferably a $Na_2FeO_4$ and/or $K_2FeO_4$ salt, under known conditions, a support made of polyethylene and/or polypropylene fibres is used to separate the anode and cathode compartments, and then after the deposition of the Fe(III)-containing precipitate on the support, the support is rinsed with distilled water and, if desired, dried.

10. The process according to Claim 9, wherein the support applied in the process is the support defined in Claims 2 to 6.

11. Use of a separator according to any one of Claims 1 to 8 and a separator prepared by the process according to any one of Claims 9 to 10 for separating the anode and cathode compartments in an electrochemical cell for the production of alkali metal ferrates.

12. Use according to Claim 11, wherein the alkali metal is sodium or potassium, preferably sodium.

**Patentansprüche**

1. Ein Separator zur Trennung der Anoden- und Kathodenfächer in elektrochemischen Zellen, enthaltend

(a) einen, aus Polyethylen- und/oder Polypropylen-Fasern hergestellten Unterstützer, und
b) einen, am Unterstützer nach Punkt a) niedergeschlagenen Fe(III)-enthaltenden Niederschlag.

2. Der Separator nach Anspruch 1, wobei das arithmetische Mittel der Porengröße im Unterstützer etwa 1-100 Mikrometer, bevorzugt etwa 10-50 Mikrometer beträgt.

3. Der Separator nach Anspruch 2, wobei die Faserdicke im Unterstützer 5 bis 50 Mikrometer, bevorzugt 10 bis 25

Mikrometer beträgt.

4. Der Separator nach einem der Ansprüche 1 bis 3, wobei der Unterstützer ein gewebter oder nichtgewebter Unterstützer, bevorzugt eine nichtgewebte Textilware ist.

5. Der Separator nach Anspruch 4, wobei die Dicke des nichtgewebten Unterstützers bevorzugt 0,1 bis 1 mm, bevorzugt 0,15 bis 0,5 mm, mehr bevorzugt 0,2 bis 0,3 mm beträgt.

6. Der Separator nach Anspruch 4 oder 5, wobei der nichtgewebte Unterstützer eine Oberflächendichte von etwa 5-100 $g/m^2$, bevorzugt etwa 15-70 $g/m^2$, mehr bevorzugt etwa 25-40 $g/m^2$ beträgt.

7. Der Separator nach einem der Ansprüche 1 bis 6, wobei der Fe(III)-enthaltende Niederschlag $Fe(OH)_3$, $Fe_2O_3$ und FeO(OH) enthält.

8. Der Separator nach einem der Ansprüche 1 bis 7, wobei sich der Fe(III)-enthaltende Niederschlag im lufttrockenen Zustand befindet.

9. Verfahren zur Herstellung eines Separators zur Trennung der Anoden- und Kathodenfächer in elektrochemischen Zellen, welches Verfahren aus den folgenden Verfahrensvarianten ausgewählt ist:

a) ein aus Polyethylen- und/oder Polypropylen-Fasern hergestellter Unterstützer wird in einer wässrigen Lösung von einem oder mehreren wasserlöslichen Fe(II)-Salzen und/oder Fe (III)-Salzen eingeweicht, dann in eine wässrige Alkalilösung eingetaucht, wobei im Falle von Fe(II)-Salz die Verwendung von Sauerstoffatmosphäre, bevorzugt Luftatmosphäre obligatorisch ist, dann wird nach der Ablagerung des Fe(III)-enthaltenden Niederschlages, der Unterstützer mit destilliertem Wasser gespült und, gewünschtenfalls, getrocknet;
b) ein aus Polyethylen- und/oder Polypropylen-Fasern hergestellter Unterstützer wird in einer wässrigen Alkalilösung eingeweicht, dann wird in eine wässrige Lösung von einem oder mehreren wasserlöslichen Fe(II)-Salzen und/oder Fe (III)-Salzen eingetaucht, wobei im Falle von Fe(II)-Salz die Verwendung von Sauerstoffatmosphäre, bevorzugt Luftatmosphäre obligatorisch ist, dann wird nach der Ablagerung des Fe(III)-enthaltenden Niederschlages, der Unterstützer mit destilliertem Wasser gespült und, gewünschtenfalls, getrocknet;
c) ein aus Polyethylen- und/oder Polypropylen-Fasern hergestellter Unterstützer wird in einer Lösung von einem oder mehreren Ferratsalzen, bevorzugt $Na_2FeO_4$ und/oder $K_2FeO_4$ eingeweicht, dann wird in destilliertes Wasser eingetaucht, und nach der Ablagerung des Fe(III)-enthaltenden Niederschlages, die Textilware mit destilliertem Wasser gespült und, gewünschtenfalls, getrocknet;
d) ein aus Polyethylen- und/oder Polypropylen-Fasern hergestellter Unterstützer wird im destillierten Wasser eingeweicht, dann wird in eine Lösung von einem oder mehreren Ferratsalzen, bevorzugt $Na_2FeO_4$ und/oder $K_2FeO_4$ eingetaucht, und nach der Ablagerung des Fe(III)-erhaltenen Niederschlages, wird die Textilware mit destilliertem Wasser gespült und, gewünschtenfalls, getrocknet; oder
e) während der Elektrolyse eines Alkalimetall-Ferratsalzes, bevorzugt eines $Na_2FeO_4$- und/oder $K_2FeO_4$-Salzes, unter bekannten Umständen, wird ein, aus Polyethylen- und/oder Polypropylen-Fasern hergestellter Unterstützer zur Trennung der Anoden- und Kathodenfächer verwendet, und dann wird nach der Ablagerung des Fe(III)-erhaltenen Niederschlages am Unterstützer, der Unterstützer mit destilliertem Wasser gespült und, gewünschtenfalls, getrocknet.

10. Das Verfahren nach Anspruch 9, wobei der im Verfahren verwendete Unterstützer der in Ansprüchen 2 bis 6 definierte Unterstützer ist.

11. Verwendung eines Separators nach einem der Ansprüche 1 bis 8 und eines nach dem Verfahren nach einem der Ansprüche 9 bis 10 hergestellten Separators zur Trennung der Anoden- und Kathodenfächer in einer elektrochemischen Zelle zur Herstellung von Alkalimetall-Ferraten.

12. Die Verwendung nach Anspruch 11, wobei das Alkalimetall Natrium oder Kalium, bevorzugt Natrium ist.

## Revendications

1. Un séparateur pour séparer les compartiments d’anode et de cathode dans des cellules électrochimiques, comprenant

(a) un support constitué de fibres de polyéthylène et/ou de polypropylène, et
b) un précipité contenant du Fe(III) déposé sur le support selon le point a).

**2.** Le séparateur selon la revendication 1, dans lequel la moyenne arithmétique des tailles de pores dans le support est d'environ 1 à 100 micromètres, de préférence d'environ 10 à 50 micromètres.

**3.** Le séparateur selon la revendication 2, dans lequel l'épaisseur des fibres dans le support est de 5 à 50 micromètres, de préférence de 10 à 25 micromètres.

**4.** Le séparateur selon l'une quelconque des revendications 1 à 3, dans lequel le support est un support tissé ou non tissé, de préférence un textile non tissé.

**5.** Le séparateur selon la revendication 4, dans lequel l'épaisseur du support non tissé est de préférence de 0,1 à 1 mm, de préférence de 0,15 à 0,5 mm, plus préférablement de 0,2 à 0,3 mm.

**6.** Le séparateur selon la revendication 4 ou 5, dans lequel le support non tissé a une densité de surface d'environ 5 à 100 g/$m^2$, de préférence d'environ 15 à 70 g/$m^2$, plus préférablement d'environ 25 à 40 g/$m^2$.

**7.** Le séparateur selon l'une quelconque des revendications 1 à 6, dans lequel le précipité contenant du Fe(III) comprend du $Fe(OH)_3$, $Fe_2O_3$ et FeO(OH).

**8.** Le séparateur selon l'une quelconque des revendications 1 à 7, dans lequel le précipité contenant du Fe(III) est dans un état sec à l'air.

**9.** Un procédé de production d'un séparateur pour séparer les compartiments d'anode et de cathode dans des cellules électrochimiques, le procédé étant sélectionné parmi les variantes de procédé suivantes :

a) un support constitué de fibres de polyéthylène et/ou de polypropylène est trempé dans une solution aqueuse d'un ou de plusieurs sels de Fe(II) et/ou de Fe(III) solubles dans l'eau, puis immergé dans une solution alcaline aqueuse, où, dans le cas du sel de Fe(II), l'utilisation de l'atmosphère d'oxygène, de préférence l'atmosphère d'air est obligatoire, puis après le dépôt du précipité contenant du Fe(III), le support est rincé avec de l'eau distillée et, si souhaité, séché;
b) un support constitué de fibres de polyéthylène et/ou de polypropylène est trempé dans une solution alcaline aqueuse, puis immergé dans une solution aqueuse d'un ou de plusieurs sels de Fe(II) et/ou de Fe(III) solubles dans l'eau, où, dans le cas du sel de Fe (II), l'utilisation de l'atmosphère d'oxygène, de préférence l'atmosphère d'air est obligatoire, puis après le dépôt du précipité contenant du Fe(III), le support est rincé avec de l'eau distillée et, si souhaité, séché;
c) un support constitué de fibres de polyéthylène et/ou de polypropylène est trempé dans une solution d'un ou de plusieurs sels de ferrate, de préférence $Na_2FeO_4$ et/ou $K_2FeO_4$, puis immergé dans de l'eau distillée et, après le dépôt du précipité contenant du Fe(III), les tissus sont rincés avec de l'eau distillée et, si désiré, séchés;
d) un support constitué de fibres de polyéthylène et/ou de polypropylène est trempé dans de l'eau distillée, puis immergé dans une solution d'un ou plusieurs sels de ferrate, de préférence $Na_2FeO_4$ et/ou $K_2FeO_4$, et après le dépôt du précipité contenant du Fe(III), les tissus sont rincés avec de l'eau distillée, et, si désiré, séchés; ou
e) pendant l'électrolyse d'un sel de ferrate de métal alcalin, de préférence un sel de $Na_2FeO_4$ et/ou $K_2FeO_4$, dans des conditions connues, un support constitué de fibres de polyéthylène et/ou de polypropylène est utilisé pour séparer les compartiments d'anode et de cathode, puis après le dépôt du précipité contenant du Fe(III) sur le support, le support est rincé avec de l'eau distillée et, si souhaité, séché.

**10.** Le procédé selon la revendication 9, dans lequel le support appliqué dans le procédé est le support défini dans les revendications 2 à 6.

**11.** Utilisation d'un séparateur selon l'une quelconque des revendications 1 à 8 et d'un séparateur préparé par le procédé selon l'une quelconque des revendications 9 à 10 pour séparer les compartiments d'anode et de cathode dans une cellule électrochimique pour la production de ferrates de métaux alcalins.

**12.** Utilisation selon la revendication 11, dans laquelle le métal alcalin est le sodium ou le potassium, de préférence le sodium.

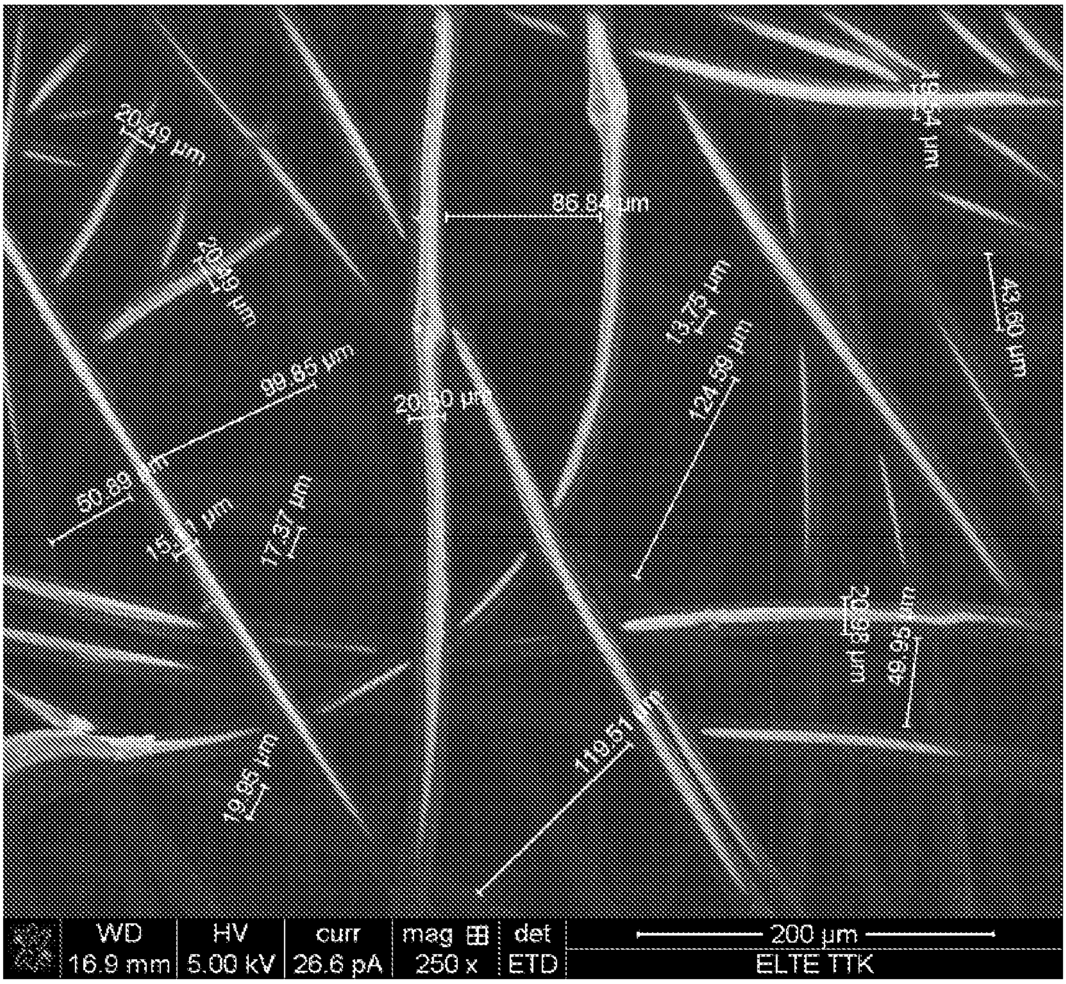
86.84 µm
99.65 µm
50.89 µm
20.50 µm
13.75 µm
124.58 µm
43.60 µm
17.37 µm
49.95 µm
119.51 µm
19.95 µm
20.49 µm
WD
16.9 mm
HV
5.00 kV
curr
26.6 pA
mag
250 x
det
ETD
200 µm
ELTE TTK

*Figure 1*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- HU P1600474
- CN 1233876 C
- JP 2002151038 A
- CN 102487132 A
- US 7054051 B2


### Non-patent literature cited in the description


- **G.W. THOMPSON ; L.T. OCKERMAN ; J.M. SCHREYER.** Preparation and purification of potassium ferrate (VI). *Journal of the American Chemical Society,* 1951, vol. 73, 1379-1381
- **J.C. POGGENDORFF.** *Sitzungsberichte der Akademie der Wissenschaften zu Berlin,* vol. 263, 312
- **WEGE.** *Annalen der Physik und Chemie,* vol. 54 (1841), 353-377
- **W. PICK ; F. HABER.** Über die elektrochemische Bildung eisensaurer Alkalisalze. *Zeitschrift für Elektrochemie,* 1901, vol. 17, 713-724
- **SARA RONCA.** Brydson's Plastics Materials. 2017